# EUROPEAN PATENT SPECIFICATION

(11) **EP 0 988 601 B1**
(45) Date of publication and mention of the grant of the patent: **18.10.2006**
(21) Application number: 98903540.7
(22) Date of filing: 20.01.1998
(51) Int. Cl.: G06F 13/00

(54) **SYSTEM FOR ACCESSING AND TRANSFERRING INFORMATION FROM A PRIVATE COMPUTER**
SYSTEM ZUM INFORMATIONSZUGRIFF UND ZUR INFORMATIONSÜBERTRAGUNG VON EINEM PERSONALRECHNER
SYSTEME PERMETTANT D'AVOIR ACCES A DES INFORMATIONS ET DE LES TRANSFERER A PARTIR D'UN ORDINATEUR PERSONNEL

(30) Priority: 30.04.1997 US 847139
(43) Date of publication of application: 29.03.2000
(73) Proprietor: MOTOROLA, INC., Schaumburg, IL 60196 (US)
(72) Inventor: ENGELSMA, Jonathan, R., South Elgin, IL 60177 (US); BUHRKE, Eric, Clarendon Hills, IL 60514 (US); LEE, Kang, Lisle, IL 60532 (US)
(74) Representative: Openshaw, Paul Malcolm
(86) International application number: PCT/US1998/000913
(87) International publication number: WO 1998/049625

(56) References cited:
- EP-A- 0 650 284
- WO-A-96/37989
- US-A- 5 673 322
- US-A- 5 675 507
- US-A- 5 732 074
- FENTON C J ET AL: "MOBILE DATA SERVICES" BT TECHNOLOGY JOURNAL, BT LABORATORIES, GB, vol. 14, no. 3, 1 July 1996 (1996-07-01), pages 92-108, XP000598159 ISSN: 1358-3948

## Description

The present invention relates generally to communication systems and, more particularly, to a system and method for accessing and transferring information from a private computer.

### BACKGROUND OF THE INVENTION

Computers are used to retrieve and communicate information such as electronic mail, electronic planner scheduling data, world wide web documents, and news articles. Advances in speech processing techniques such as text-to-speech and automatic speech recognition now provide the technology necessary for computer users to retrieve and communicate information using a voice interface provided by a plain old telephone system (POTS) landline or a wireless communication system. The information which communication system users might want to access in their computing environments from their telephone, however, is not readily available to landline or wireless telephone service providers. Private computing system architecture may include security authentication network elements, such as firewalls, and are commonly used to protect information from being accessed by outside sources.

**FENTON CJ ET AL: "MOBILE DATA SERVICES" BT TECHNOLOGY** JOURNAL, BT LABORATORIES, GB, vol. 14, no. 3, 1 July 1996 (1996-07-01), pages 92-108, XP000598159 ISSN: 1358-3948, discloses a data communication in a GSM communication system and in a DECT communication system. A host computer transfers data to, inter alia, a GSM mobile phone. The host computer is coupled to an interworking unit via an internet network, which interworking unit provides translation services for the host computer and whatever network, for example, a GSM network, that the data is being transferred to. However, it fails to disclose any network provision permitting the wireless system to provide the host computer with appropriate data transfer software.

WO 96 37989 A discloses operation of a self-contained voice mail system, in which all implementation is carried out on a voice mail server.

Therefore, a need exists for a system and method for accessing and transferring information from a private computing system using portable wireless devices in a manner which is ubiquitous to the wireless network operator.

### SUMMARY OF THE INVENTION

According to an aspect of the present invention, the foregoing need is addressed by a system for accessing information from a private computer system as defined in claim 1. Such a system includes a network element associated with a multiple access wireless communication system and a server in communication with the network element. The system includes an information delivery agent which is responsive to the server, the information delivery agent configured to communicate via hyper text transfer protocol. The system further includes an internet interface associated with the private computing system. The internet interface is responsive to the information delivery agent. The network element receives the information from the private computing system via the internet interface, the information delivery agent, and the server.

Advantages of the present invention will become readily apparent to those skilled in the art from the following description of the preferred embodiment(s) of the invention which have been shown and described by way of illustration. As will be realized, the invention is capable of other and different embodiments, and its details are capable of modification in various respects. Accordingly, the drawings and descriptions are to be regarded as illustrative in nature and not as restrictive.

### BRIEF DESCRIPTION OF THE DRAWINGS

FIG. 1 is a block diagram of a system for accessing information from a private computer system according to a preferred embodiment of the present invention.
FIG. 2 is a block diagram of the multiple access wireless communication system shown in FIG. 1.
FIG. 3 is a flow diagram of a method for transferring information from a private computer to the multiple access wireless communication system depicted in FIG. 1, according to a preferred embodiment of the present invention.

### DETAILED DESCRIPTION OF THE PREFERRED EMBODIMENT

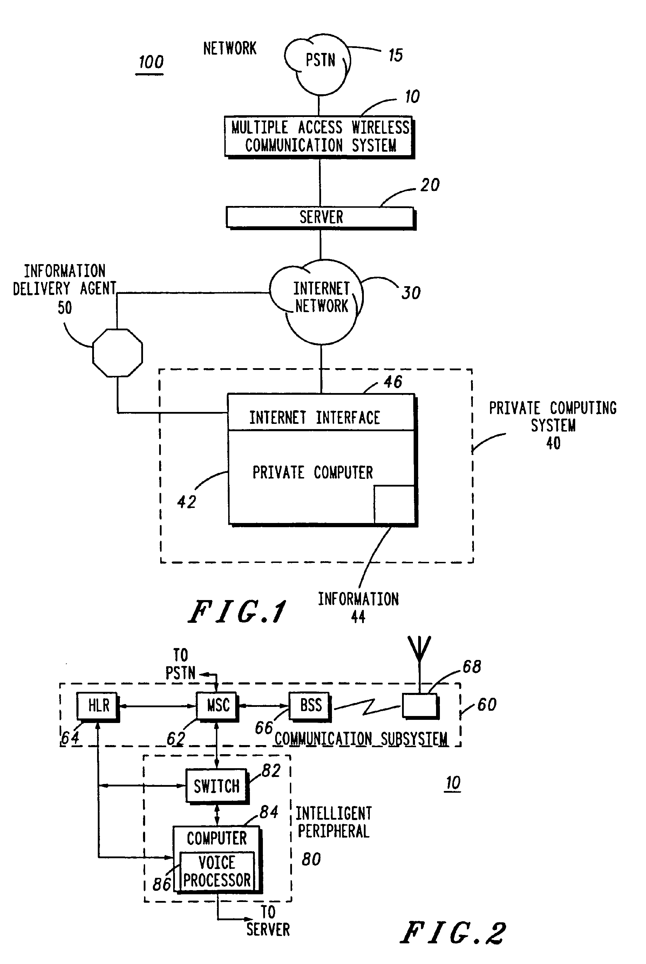

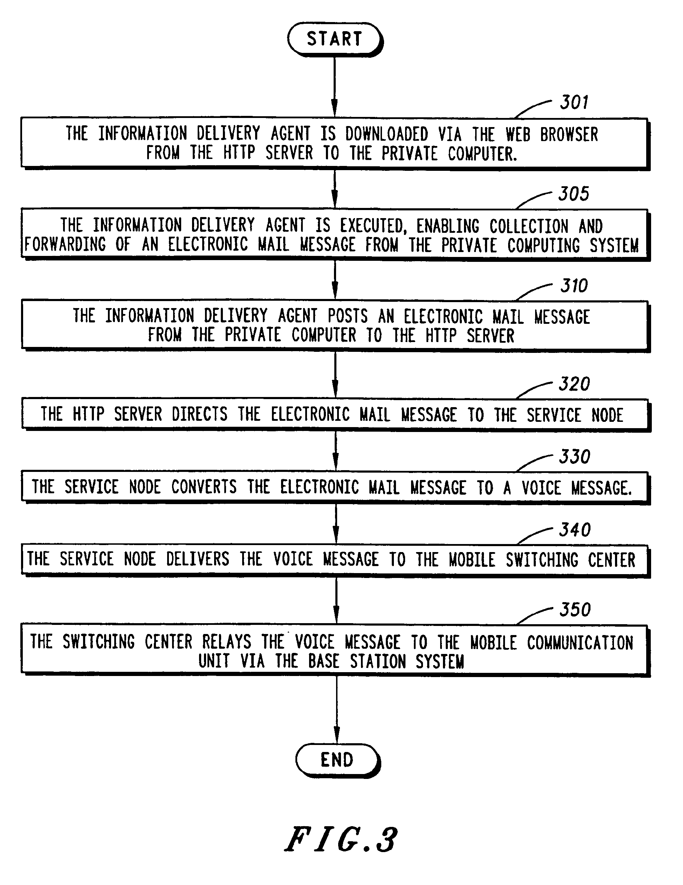

Turning now to the drawings, wherein like numerals designate like components, FIG. 1, a network 100, is illustrated. Network 100 includes a multiple access wireless communication system 10 (discussed below in FIG.2), for example a cellular communication system, a personal communication system, a paging communication system, a trunked communication system or a satellite system, in communication with a server 20 and a public switched telephone network (PSTN) 15, an internet network 30 coupled to server 20, and a private computing system 40.

Server 20 may be a general purpose computer configured with hyper text transfer protocol (HTTP) and/or simple mail transfer protocol SMTP, and is coupled to an internet network 30. Linking between server 20 and internet network 30 may occur by way of a protocol such as transmission control protocol/internet protocol, (TCP/IP). Internet network 30 provides access to many computer networks joined together over high-speed data links, the joined networks commonly referred to as the internet. Internet network 30 is, in turn, coupled to a private computing system 40 via TTC/IP. An information delivery agent 50 is in communication with internet network 30 and private computing system 40. Information delivery agent 50 may reside in and is responsive to server 20, and is configured to communicate via hyper text transfer protocol.

Private computing system 40 includes at least one computer 42, for example a personal workstation, such computers being well known and widely available, in communication with internet network 30 via an internet interface 46 commonly referred to as an internet browser or a web browser such as Netscape Navigator™ web browser or Microsoft's Internet Explorer™ web browser, although any suitable HTTP client or SMTP client may be used. Private computing system 40 may be a personal computer, a corporate intra-network, a wide area network, a local area network, or any other suitable computer network whose information 44, for example electronic mail messages or any other information, may or may not be protected by a security authentication method such as a firewall.

Information delivery agent 50 may be a software module, resident on server 20 or installed on private computing system 40. Upon request from private computer 42 and/or internet interface 46, information delivery agent 50 is capable of being downloaded and executed by private computer 42 running internet interface 46. Information delivery agent 50 functions to run a specific task in private computing system 40 and may be implemented in a variety of ways using well-known programming techniques, including a Netscape™ plug-in, a Java™ applet or an ActiveX™ component, all well known in the art, or by another appropriate method. Information delivery agent 50 may be downloaded and executed by a Web browser resident in private computing system 40 via an HTTP request to a remote world-wide web HTTP server such as server 20. For example, a user (not shown) of private computing system 40 may elect to gain entry to a web site on server 20 via an HTTP request through internet network 30, in order to download information delivery agent 50.

Private computing system 40 may be protected by an "internet firewall" (not shown), which may be enlisted to make HTTP requests to outside computer systems on behalf of internet interface 46. The internet firewall provides a single point of entry where a defense may be implemented, supervising access to resources on the internet from within private computing system 40, as well as providing controlled access to private computing system 40 from the internet.

As shown in FIG. 2, multiple access wireless communication system 10 includes communication subsystem 60 comprised of network elements including a home location register (HLR) 64, a mobile switching center (MSC) 62, and a base station system (BSS) 66. As shown, BSS 66 is in communication with mobile communication unit 68. Each of the elements 64, 62 and 66 is commercially available from Motorola, Inc. An intelligent peripheral (IP) 80 may provide selectable information interactions, such as converting a text signal into a speech signal, or vise versa, within multiple access wireless communication system 10. A service node, commercially available from Motorola, Inc., may also be used in place of, or in addition to, intelligent peripheral 80. A service node or an intelligent peripheral may include one or more of the following, among other things: a programmable switch 82, such switches being well-known and widely available, and a computer 84 which includes a voice processor 86 for speech processing, for example text-to-speech conversion.

Communication subsystem 60 communicates to a public switched telephone network (PSTN) 15 through mobile switching center 62, which may be an EMX™ 2500, commercially available from Motorola, Inc., or another suitable type of switching center. MSC 62 is in communication with BSS 66 which includes at least one base station controller (not shown) and a plurality of transceivers (not shown).

Home location register (HLR) 64 may be in communication with both MSC 62 and intelligent peripheral 80, or with other network elements. HLR 64 provides a database of mobile communication unit users as well as information related to features and services furnished by multiple access wireless communication system 10. For example, a user of mobile communication unit 68 may be entitled to a feature provided by multiple access wireless communication system 10 such as text to speech conversion enabled by IP 80.

Multiple access wireless communication between base station system 66 and mobile communication unit 68 preferably occurs over radio frequency (RF) channels which provide physical paths over which analog or digital communication such as voice, data and video are transmitted. A communication system using digital channelization which is suitable for use with various embodiments of the present invention is described in detail in a direct sequence code division multiple access (DS-CDMA) cellular communication system, such as set forth in the Telecommunications Industry Association Interim Standard 95A (TIA/EIA IS-95A) herein after referred to as IS-95A and incorporated herein by reference.

FIG. 3 illustrates a method for accessing and transferring information from private computer 42 to a multiple access wireless communication system 10. The method preferably operates in network 100, as illustrated in FIGs. 1 and 2. That is, network 100 includes a private computing system 40 which can be further separated into a private computer 42 or any number of computers configured and/or communicating in any manner, equipped with an internet interface 46 such as a web browser. Private computing system 40 is linked to an internet network 30 through web browser 46. Also linked to internet network 30 is a HTTP server 20 which contains task specific software which is downloadable to, and executable by, web browser 46 in the private computing network 40. The task specific software may be referred to as an information delivery agent 50. Information delivery agent 50, when executed, may be used to access information 44 such as an electronic mail message or any other type of information from private computer 42. Multiple access wireless communication system 10 is coupled to HTTP server 20. Multiple access wireless communication system 10 includes a service node 80 and a communication subsystem 60. Communication subsystem 60 includes a mobile switching center 62, a home location register 64, a base station system 66, and a mobile communication unit 86 responsive to mobile switching center 62 via base station system 66. Service node 80 is linked to, and in communication with, mobile switching center 62. The method for accessing and transferring information 44 from private computer 42 to multiple access wireless communication system 10 starts at block 301 where information delivery agent 50 is downloaded via Web browser 46, from HTTP server 20 to private computer 42. At block 305, information delivery agent 50 is executed, such that collection and forwarding of an electronic mail message 44 from private computing system 40, will be performed. Next, information delivery agent 50 posts electronic mail message 44 from private computer 42 to HTTP server 20, at block 310. At block 320, HTTP server 20 directs electronic mail message 44 to service node 80. Next, service node 80 converts electronic mail message 44 to a voice message at block 330. At block 340, service node 44 delivers the voice message to mobile switching center 62. At block 350, mobile switching center 62 relays the voice message to mobile communication unit 68 via base station system 66.

A user of mobile communication unit 68 may then exercise a number of standard options well known in telephony, for example, listening to, saving, forwarding and/or deleting the electronic mail. Upon returning to the private computing system 40, the user of mobile communication unit 68 may elect to update the private computer 42 with a summary of electronic mail activity , such as activity resulting from block 350, as well as disable information delivery agent 50.

Mobile switching center 62 may also elect to hold the message in a voicemail queue for future delivery, or it may elect to deliver the message in a text format, in which case, a suitable feature would have been invoked in service node 80.

The problem of inaccessibility to information in a private computing system may be addressed by agreements made between internet service providers and communication system operators. Such agreements may enable an individual with a web browser in their private computing system, and an account with a communication system provider, to access and transfer their private computer system information. The agreement may require the communication system operator to employ software compatible with a Web browser, the software specifically tasked to forward electronic mail through an internet network, to a communication system provider, for receipt by a communication system user.

There are numerous advantages to network 10 and the method described herein. For example, the method obviates the need for individual agreements between internet service providers and wireless communication system operators. Any individual having an account with a wireless cellular system operator and access to the internet may be a potential for a service utilizing this method or system.

It will be apparent that other forms of the invention, and embodiments other than the specific embodiments described above, may be devised without departing from the scope of the appended claims, and therefore it is intended that the scope of this invention will only be governed by the following claims.

## Claims

1. A system for accessing, by a mobile communication unit, information from a private computing system (40) comprising:
a network element, wherein the network element is a part of a multiple access wireless communication system (10);
an internet network-based server (20) in communication with the network element, wherein the server comprises software implementing an information delivery agent that is downloadable and executable by an internet browser application; and
a private computing system (40) in communication with the server, wherein the private computing system comprises an internet browser application that downloads an information delivery agent (50) from the server (20), wherein the information delivery agent (50) comprises an application that is configured to access information maintained by the private computing system (40) and is further configured to communicate via hyper text transfer protocol, wherein the private computing system (40) comprises means to execute the information delivery agent (50) and the internet browser application, and wherein the internet browser application is responsive to the information delivery agent (50);
the multiple access wireless communication system (10) comprising means for, in response to the network element receiving the information from the private computing system (40) via the information delivery agent (50) and the server (20) providing the information to a mobile communication unit (68) as a voice message.

2. The system according to claim 1, wherein the multiple access wireless communication system (10) is selected from the group consisting of: a cellular communication system, a personal communication System, a paging communication system, a trunked communication system and a satellite system.

3. The system according to claim 1, wherein the server (20) comprises one of an HTTP server and an SMTP server.

4. The system according to claim 1, wherein the network element comprises an intelligent peripheral (80).

5. The system according to claim 1 wherein the internet browser application is part of an internet interface (46).

6. The system according to claim 1, wherein the private computing system (40) comprises means to post the information to the server (20) via the information delivery agent (50).

7. The system according to claim 6, wherein the server (20) comprises means to direct the information to the network element.

8. The system according to claim 1, wherein the information delivery agent (50) is installed on the private computing system (40).

## Patentansprüche

1. System zum Zugreifen auf Information von einem privaten Computersystem (40) mittels einer mobilen Kommunikationseinheit, umfassend:
ein Netzwerkelement, wobei das Netzwerkelement ein Teil eines Systems (10) zur drahtlosen Kommunikation mit Mehrfachzugriff ist;
einen netzwerkbasierten Internetserver (20) der mit dem Netzwerkelement kommuniziert, wobei der Server Software aufweist, die einen Informationslieferagenten implementiert, der durch eine Internet-Browseranwendung herunterladbar und ausführbar ist; und
ein privates Computersystem (40), das mit dem Server kommuniziert, wobei das private Kommunikationssystem eine Internet-Browseranwendung aufweist, die von dem Server (20) einen Informationslieferagenten (50) herunterlädt, wobei der Informationslieferagent (50) eine Anwendung umfasst, die so eingerichtet ist, dass sie auf von dem privaten Computersystem (40) gehaltene Information zugreift, und weiterhin so eingerichtet ist, dass sie über ein Hypertext-Übertragungsprotokoll kommuniziert, wobei das private Computersystem (40) Mittel zum Ausführen des Informationslieferagenten (50) und der Internet-Browseranwendung aufweist und wobei die Internet-Browseranwendung auf den Informationslieferagenten (50) anspricht;
wobei das System (10) zur drahtlosen Kommunikation mit Mehrfachzugriff Mittel zum Bereitstellen der Information an eine mobile Kommunikationseinheit (68) als eine Sprachnachricht aufweist, in Reaktion darauf, dass das Netzwerkelement die Information von dem privaten Computersystem (40) über den Informationslieferagenten (50) und den Server (20) erhält.

2. System nach Anspruch 1, wobei das System (10) zur drahtlosen Kommunikation mit Mehrfachzugriff aus der Gruppe mit den folgenden Bestandteilen ausgewählt ist:
ein zellulares Kommunikationssystem, ein persönliches Kommunikationssystem ("Personal Communication System"), ein Paging-Kommunikationssystem , ein Trunked-Kommunikationssystem und ein Satellitensystem.

3. System nach Anspruch 1, wobei der Server (20) einen HTTP-Server oder einen SMTP-Server aufweist.

4. System nach Anspruch 1, wobei das Netzwerkelement eine intelligente Peripherieeinrichtung (18) aufweist.

5. System nach Anspruch 1, wobei die Internet-Browseranwendung Teil einer Internetschnittstelle (46) ist.

6. System nach Anspruch 1, wobei das private Computersystem (40) Mittel zum Senden der Information an den Server (20) über den Informationslieferagenten (50) aufweist.

7. System nach Anspruch 6, wobei der Server (20) Mittel zum Richten der Information an das Netzwerkelement aufweist.

8. System nach Anspruch 1, wobei der Informationslieferagent (50) in dem privaten Computersystem (40) installiert ist.

## Revendications

1. Système d'accès, par le biais d'une unité de communication mobile, à des informations à partir d'un système informatique privé (40) comprenant :
un élément de réseau, où l'élément de référence est une partie d'un système de communication sans fil à accès multiples (10),
un serveur à base de réseau de système Internet (20) en communication avec l'élément de réseau, où le serveur comprend un logiciel mettant en oeuvre un agent de délivrance d'informations qui peut être téléchargé et exécuté par une application de navigateur du système Internet, et
un système informatique privé (40) en communication avec le serveur, où le système informatique privé comprend une application de navigateur de système Internet qui télécharge un agent de délivrance d'informations (50) à partir du serveur (20), où l'agent de délivrance d'informations (50) comprend une application qui est configurée pour accéder à des informations entretenues par le système informatique privé (40) et est en outre configuré pour communiquer par l'intermédiaire du protocole de transfert hypertexte, où le système informatique privé (40) comprend un moyen pour exécuter l'agent de délivrance d'informations (50) et l'application de navigateur de système Internet, et où l'application de navigateur de système Internet répond à l'agent de délivrance d'informations (50),
le système de communication sans fil à accès multiples (10) comprend un moyen destiné, en réponse au fait que l'élément de réseau reçoit les informations à partir du système informatique privé par l'intermédiaire de l'agent de délivrance d'informations (50) et du serveur (20), à fournir les informations à une unité de communication mobile (68) sous la forme d'un message vocal.

2. Système selon la revendication 1, dans lequel le système de communication sans fil à accès multiples (10) est choisi à partir du groupe constitué de : un système de communication cellulaire, un système de communication personnel, un système de communication d'appel de personne, un système de communication à ressources partagées, et un système satellite.

3. Système selon la revendication 1, dans lequel le serveur (20) comprend l'un d'un serveur HTTP et d'un serveur SMTP.

4. Système selon la revendication 1, dans lequel l'élément de réseau comprend un périphérique intelligent (80).

5. Système selon la revendication 1, dans lequel l'application de navigateur de système Internet fait partie d'une interface de système Internet (46).

6. Système selon la revendication 1, dans lequel le système informatique privé (40) comprend un moyen pour envoyer les informations au serveur (20) par l'intermédiaire de l'agent de délivrance d'informations (50).

7. Système selon la revendication 6, dans lequel le serveur (20) comprend un moyen pour diriger les informations vers l'élément de réseau.

8. Système selon la revendication 1, dans lequel l'agent de délivrance d'informations (50) est installé sur le système informatique privé (40).
